# FASCICULE DE BREVET EUROPEEN

(11) **EP 2 487 053 B1**
(45) Date de publication et mention de la délivrance du brevet: **23.07.2014**
(21) Numéro de dépôt: 11352002.7
(22) Date de dépôt: 11.02.2011
(51) Int. Cl.: B60C 23/04, B60C 23/06

(54) **Procédé et dispositif de surveillance de données de pneumatiques de véhicule**
Verfahren und Vorrichtung zur Datenüberwachung von Autoreifen
Method and device for monitoring vehicle tyre data

(43) Date de publication de la demande: 15.08.2012
(73) Titulaire: Continental Automotive France, 31100 Toulouse (FR); Continental Automotive GmbH, 30165 Hannover (DE)
(72) Inventeur: Fink, Alexander, Oakland Township Michigan 48306 (US); Guinart, Nicolas, 31200 Toulouse (FR); Kuchler, Gregor, 93055 Regensburg (DE); Spotka, Jürgen, 93128 Regenstauf (DE); Pflugmann, Marc, 94369 Rain (DE)
(74) Mandataire: Bonn, Roman Klemens

(56) Documents cités:
- WO-A1-2009/070065
- US-A1- 2010 083 747

## Description

L'invention concerne un système de surveillance de données en provenance de pneumatiques de véhicule, par exemple un système de surveillance de la pression des pneumatiques et plus particulièrement un procédé pour déterminer la position (sur le véhicule) d'un pneumatique ayant un numéro d'identification (ID) unique. Cette position de pneumatique peut être chacune des positions suivantes: avant gauche (AvG), avant droite (AvD), arrière gauche (ArG), arrière droite (ArD).

Les systèmes connus de surveillance de la pression des pneumatiques (TPMS pour Tire Pressure Monitoring System en langue anglo-saxonne) comprennent une unité roue mise en place dans chaque roue, une antenne de réception sur le véhicule, et une unité centrale de traitement montée sur le véhicule pour effectuer la surveillance de la pression des pneus. Chaque unité roue comprend un émetteur pour transférer les données provenant des capteurs mis en place dans les unités roues. Lesdits capteurs peuvent être choisis parmi un groupe comprenant: un capteur de pression qui mesure la pression d'air interne du pneumatique, un capteur de température qui mesure la température de l'air à l'intérieur du pneumatique, un capteur de position angulaire, un accéléromètre .... D'autres capteurs peuvent être présents dans l'unité roue pour détecter des défauts ou mesurer d'autres valeurs paramétriques relatives aux pneumatiques ou aux roues, tel US 2010/083747 A1 format les contenus respectifs des préambules des revendications 1 et 11. A chaque unité roue est assigné un identifiant ID unique émis par radio avec les données mesurées par ce capteur vers l'antenne de réception du véhicule, puis à l'unité centrale de traitement du véhicule.

L'identifiant (ID) est initialement mémorisé dans l'unité centrale de traitement, associé à la position de la roue correspondante. L'unité centrale de traitement peut générer des informations relatives aux pneumatiques ou des messages d'alerte destinés à être affichés au conducteur, par exemple dans le cas d'une faible pression de pneumatique. Si un véhicule reste sans mouvement pendant une durée relativement longue, l'assignation de l'identifiant ID à une position sur le véhicule est relancée car un ou plusieurs pneumatiques peuvent avoir changé de place ou une interversion de pneumatiques peut s'être produite, pendant que le véhicule était immobile.

Certains systèmes de surveillance de la pression de pneumatiques connus peuvent effectuer l'assignation de position (la localisation) des capteurs de pression d'air respectifs de façon automatisée, c'est-à-dire sans actions spécifiques du conducteur. Dans un processus connu, chaque passage de roue est équipé d'une unité de déclenchement. Chaque unité de déclenchement émet successivement un signal d'activation. Les unités roues répondent successivement aux unités de déclenchement, apprenant ainsi leur identifiant ID et déterminant leur position simultanément. Ces procédés, qui implémentent explicitement le processus d'initialisation (reconnaissance des identifiants liés au véhicule) et de localisation en une seule étape, sont généralement associés à des coûts de composants accrus et à une complexité relativement élevée du système global.

Avec un nombre réduit de composants, le procédé est effectué en deux phases. Dans une première phase, généralement appelée phase "d'initialisation", les identifiants du véhicule sont recouvrées. Dans une seconde phase, une position de roue est assignée à chaque identifiant recouvré. Cette seconde phase est généralement appelée phase de "localisation".

La fonction d'initialisation est principalement basée sur des étapes statistiques. De plus en plus de véhicules sont équipés de système de surveillance de la pression des pneus. Toutefois, le nombre de fréquences radioélectriques est limité. Ainsi, il peut arriver que lorsqu'un véhicule se déplace près d'un autre, le récepteur de l'un des véhicules reçoive les identifiants des roues de l'autre véhicule. La fonction d'initialisation est basée sur la supposition que les transmissions des identifiants des unités roues du bon véhicule sont reçues plus fréquemment que les identifiants d'un véhicule voisin. Une fois que les identifiants sont recouvrés, la précision du résultat peut être évaluée et la robustesse accrue en évaluant des informations supplémentaires.

Par exemple, toutes les unités roues du même véhicule devraient avoir sensiblement les mêmes vitesses de rotation (si le véhicule se déplace en ligne droite à vitesse stabilisée) et des profils de température approximativement semblables. Il est également possible d'évaluer l'intensité des signaux reçus. Toutefois, les approches décrites peuvent conduire à de fausses conclusions ou à aucune conclusion du tout, si deux ou plusieurs véhicules se déplacent l'un à côté de l'autre ou l'un derrière l'autre durant une période de temps relativement longue. Ceci peut se produire quand le véhicule se trouve dans des conditions de circulation chargée.

La localisation des nouvelles positions de pneumatiques, effectuée après chaque arrêt relativement long du véhicule, a le principal inconvénient que le système de surveillance de la pression de pneumatiques est occupé relativement longtemps pour la correcte assignation des identifiants et des positions correspondantes des unités roues, avant que le système puisse évaluer les pressions d'air mesurées dans le mode de fonctionnement normal et les assigner à une position correspondante d'unité roue sur le véhicule. De ce fait le conducteur, en cas de chute de pression d'air dans un pneumatique spécifique, peut être avertit tardivement.

Souvent le véhicule a déjà quitté une place de stationnement lorsqu'un message d'alerte de pression s'affiche. Le conducteur doit alors arrêter le véhicule à un endroit gênant ou rouler plus longtemps avec une pression d'air incorrecte avant de pouvoir résoudre le problème du pneumatique. L'un ou l'autre cas constitue un véritable risque sécuritaire.

En conséquence, un objet de l'invention est de fournir un procédé amélioré et plus rapide, de corrélation des identifiants reçus des unités roues avec les positions desdites unités relativement à un véhicule après des interruptions de conduite.

Un autre objet de l'invention est d'exécuter le procédé avec un nombre réduit de composants. Le procédé utilise uniquement un capteur angulaire et des capteurs qui sont déjà présents sur le véhicule pour réaliser d'autres fonctions.

A cet effet, selon un premier aspect, l'invention concerne un procédé de détermination d'identifiant d'unités roues d'un véhicule et des positions relativement au véhicule des roues sur lesquelles lesdites unités roues sont montées, le véhicule étant équipé d'un capteur de vitesse pour chaque roue, chaque unité roue étant équipée de moyens pour transmettre à une position angulaire prédéterminée de la roue correspondante autour de son axe, un message comportant l'identifiant de l'unité roue, une unité centrale de traitement recevant ledit message et une information desdits capteurs de vitesse, le procédé comprenant les étapes suivantes :
- a) comptage, pour chaque identifiant, d'un nombre "nt" de réceptions dudit identifiant,
- b) traitement statistique des nombres "nt" afin de déterminer parmi tous les identifiants reçus ceux qui sont le plus probablement l'identifiant d'une unité roue du véhicule, les identifiants devenant des identifiants candidats du véhicule, le processus statistique prenant fin quand le nombre d'identifiant candidats est au moins égal au nombre de roues du véhicule,
- c) détermination qu'un identifiant candidat est l'identifiant d'une unité roue si ledit identifiant candidat répond à un critère prédéterminé relativement à au moins un instant de réception dudit identifiant candidat et à la position angulaire d'une roue audit instant, et attribution à la roue correspondante de la position relativement au véhicule du capteur de vitesse fournissant ladite position angulaire.

Dans un premier mode de réalisation de l'étape b), un identifiant est accepté comme identifiant candidat si, pour ledit identifiant, le nombre "nt" est supérieur à une première valeur de seuil prédéterminée et si le nombre des différents identifiants pour lesquelles le nombre "nt" est supérieur à ladite première valeur de seuil prédéterminée est au moins égal au nombre de roues du véhicule.

Dans un second mode de réalisation de l'étape b), un identifiant est accepté comme identifiant candidat si, pour ledit identifiant, le nombre "nt" est supérieur à une valeur moyenne "ani" des nombres "nt" et si le nombre des différents identifiants pour lesquels le nombre "nt" est supérieur à "ani" est au moins égal au nombre de roues du véhicule.

Ledit nombre moyen "ani" est la somme de tous les nombres "nt" de chaque identifiant divisé par le nombre de différents identifiants.

Dans un mode de réalisation de l'étape c), le critère est : si un identifiant candidat a ou non été reçu durant une seconde durée prédéterminée commençant après la fin de l'étape b) comme identifiant synchronisé un nombre supérieur de fois à une deuxième valeur de seuil prédéterminée. Un identifiant synchronisé est un identifiant qui est reçu quand la roue correspondante a effectué un nombre entier de révolutions depuis une dernière réception du même identifiant.

Dans un autre mode de réalisation de l'étape c), pour chaque roue, un histogramme comprenant des intervalles angulaires entre les positions des roues, entre -180° et +180°, est construit. Pour chaque identifiant candidat, l'un des intervalles de chaque roue, correspondant au nombre d'émissions synchronisées, relativement au taux d'occurrences, est augmenté de « un ». Ledit intervalle est l'intervalle angulaire auquel la roue se trouve, quand l'identifiant candidat est reçu. Dans ce mode de réalisation de l'étape c), le critère d'acceptation d'un identifiant ID candidat et de localisation de l'identifiant relativement au véhicule est qu'un rapport entre une seconde et une première valeur plus petite représentative des dispersions angulaires est supérieur à une troisième valeur de seuil prédéterminée. La troisième valeur de seuil prédéterminée peut être représentative de la variance ou de l'écart type.

Dans ce mode de réalisation de l'étape c), le critère peut être: si un rapport, entre une seconde et une première valeur plus petite représentative d'une dispersion de différentes positions angulaires courantes calculées pour chaque identifiant candidat reçu courant et pour chaque unité roue du véhicule, pour l'une des unités roues, est ou non au moins égal à la troisième valeur de seuil prédéterminée, une position angulaire courante étant la position angulaire à laquelle un identifiant courant est reçu.

Selon un second aspect, la présente invention vise à fournir un dispositif de détermination d'identifiants (initialisation) d'unités roues d'un véhicule et des positions relativement au véhicule des roues sur lesquelles lesdites unités roues sont montées (localisation), le véhicule étant équipé d'un capteur de vitesse pour chaque roue, chaque unité roue étant équipée de moyens pour transmettre à une position angulaire prédéterminée de la roue correspondante autour de son axe, un message comportant l'identifiant de l'unité roue, une unité centrale de traitement recevant ledit message et une information desdits capteurs de vitesse,
caractérisé en ce qu'il comprend :
a) un moyen de comptage, pour chaque identifiant, d'un nombre "nt" de réceptions dudit identifiant,
b) un moyen de traitement statistique des nombres "nt" afin de déterminer parmi tous les identifiants reçus ceux qui sont le plus probablement les identifiants des unités roues du véhicule, lesdits identifiants devenant des identifiants candidats du véhicule, le processus statistique prenant fin quand le nombre d'identifiant candidats est au moins égal au nombre de roues du véhicule et
c) un moyen de détermination qu'un identifiant candidat est l'identifiant d'une unité roue si ledit identifiant candidat répond à un critère prédéterminé relativement à au moins un instant de réception dudit identifiant candidat et à la position angulaire d'une roue audit instant, et d'attribution à la roue correspondante de la position relativement au véhicule du capteur de vitesse fournissant ladite position angulaire.

On notera que selon l'invention on n'attend pas que la procédure d'initialisation ait permis de trouver les n identifiants correspondants aux n roues du véhicule pour passer à la procédure de localisation. En fait la procédure d'initialisation est arrêtée dés que l'on a un nombre d'identifiants supposés appartenir au véhicule supérieur ou égal au nombre n de roues. Ces identifiants sont appelés identifiants candidats. C'est la procédure de localisation qui est ensuite chargée de trier parmi ces identifiants ceux qui appartiennent au véhicule et ceux qui n'y appartiennent pas.

D'autres objets et caractéristiques de la présente invention apparaîtront à la lecture de la description détaillée suivante considérée relativement aux dessins annexés. On notera toutefois que les dessins ne limitent en aucune façon la portée de l'invention.

Dans les dessins, dans lesquels des caractères de référence semblables désignent des éléments semblables dans toutes les diverses vues :
- La **figure 1** est un schéma de principe d'un système de surveillance de la pression des pneumatiques pouvant être utilisé avec l'invention ;
- La **figure 2** est un diagramme schématique illustrant un premier mode de réalisation des étapes **a)** et **b)** du procédé selon l'invention afin d'obtenir des identifiants candidats ;
- La **figure 3** est un diagramme schématique illustrant un second mode de réalisation des étapes **a)** et b) du procédé selon l'invention afin d'obtenir des identifiants candidats ;
- La **figure 4** est un diagramme schématique illustrant un premier mode de réalisation de l'étape **c)** du procédé selon l'invention, pour apprendre les identifiants et les positions des identifiants relativement au véhicule, en traitant uniquement les identifiants candidats ;
- La **figure 5** est un diagramme schématique illustrant un second mode de réalisation de l'étape c) du procédé selon l'invention, pour apprendre les identifiants et les positions des identifiants relativement au véhicule, en traitant uniquement les identifiants candidats et,
- La **figure 6** est un schéma illustrant des histogrammes de taux d'occurrences par rapport aux intervalles angulaires d'un identifiant candidat et pour chacune des roues. De tels histogrammes sont utilisés dans le second mode de réalisation de l'étape c).

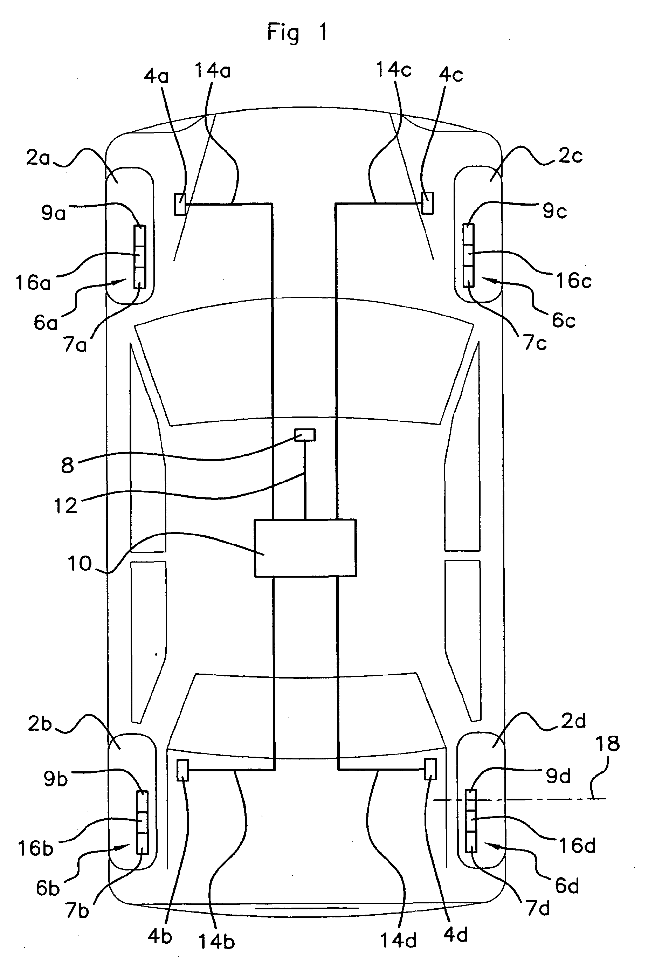

La figure 1 montre schématiquement un véhicule comportant des roues 2a à 2d, chaque roue pouvant tourner autour d'un axe 18. Le véhicule comporte un système de surveillance de la pression des pneumatiques, lequel comporte à son tour des unités roues 6a à 6d. Chaque unité roue comporte un capteur de pression, respectivement 7a à 7d, monté sur le pneumatique de la roue, respectivement 2a à 2d, du véhicule. Par exemple, le capteur de pression se trouve à l'intérieur de la chambre à air ou est associé à la valve de chambre à air. Les unités roues 6a à 6d comportent des émetteurs, respectivement 9a à 9d, qui permettent de transmettre des données à un récepteur 8 (une antenne) sans contact.

En outre, les unités roues 6a à 6d comportent des capteurs angulaires, respectivement 16a à 16d. Chaque capteur angulaire 16a à 16d permet de reconnaître au moins une position angulaire fixe de la roue autour de son axe 18. Chaque capteur angulaire peut avoir la forme d'un élément flexible tel que décrit, par exemple, dans le brevet américain US 6 112 587 au nom de Continental (marque déposée).

Le récepteur 8 transmet les données reçues depuis les unités roues 6a à 6d à une unité centrale de traitement 10, par l'intermédiaire d'une voie de transmission 12. Dans le cas le plus simple, le récepteur 8 est configuré en antenne réceptrice à l'aide de laquelle l'unité centrale de traitement 10 reçoit les données transmises.

Le système de surveillance de la pression des pneumatiques utilise des capteurs de vitesse rpm (révolutions par minute) 4a à 4d, qui sont fixés sur le véhicule et associés aux roues respectives 2a à 2d du véhicule. Les capteurs rpm peuvent par exemple faire partie d'un système de freinage ABS ("anti-blocking system" en langue anglo-saxonne ou système anti-blocage). Les capteurs rpm 4a à 4d communiquent avec l'unité centrale 10 par des voies de transmission 14a à 14d respectivement. L'unité centrale 10 connaît, par exemple, à partir des données stockées dans une mémoire, les positions de roues associées aux capteurs rpm respectifs 4a à 4d. L'unité centrale 10 sait, par exemple, que le capteur rpm 4a est assigné à la position de roue "avant gauche" du véhicule.

Chaque unité roue transmet un message uniquement quand la roue se trouve à une position angulaire prédéterminée. Ladite position angulaire prédéterminée est identifiée par des données provenant des capteurs de position angulaire 16a à 16d. Ainsi, entre deux messages provenant de la même roue, la roue a forcément effectué un nombre entier de révolutions. Chaque message comprend un identifiant ID de l'unité roue et des données provenant des capteurs montés dans cette unité roue associée à une roue correspondante.

Pour déterminer les identifiants ID (procédure d'initialisation) des unités roues du véhicule et leurs positions (procédure de localisation) relativement au véhicule à moteur, une unité centrale de traitement reçoit ledit message et les informations desdits capteurs de vitesse. Le procédé d'initialisation des identifiants ID des unités roues et d'assignation d'une position (localisation) à chaque unité roue relativement au véhicule comprend les étapes suivantes :
- a) comptage, par exemple durant une première durée prédéterminée ou à n'importe quel moment, pour chaque identifiant, d'un nombre "nt" de réceptions dudit identifiant,
- b) traitement statistique des nombres "nt" afin de déterminer parmi toutes les identifiants reçus ceux qui sont le plus probablement l'identifiant d'une unité roue du véhicule, les identifiants devenant des identifiants candidats du véhicule, le processus statistique prenant fin quand le nombre d'identifiants candidats est au moins égal au nombre de roues du véhicule, (et non lorsque le nombre d'identifiants candidats est strictement égal au nombre de roues du véhicule),
- c) détermination qu'un identifiant candidat est l'identifiant d'une unité roue si ledit identifiant candidat répond à un critère prédéterminé relativement à au moins un instant de réception dudit identifiant candidat et à la position angulaire d'une roue audit instant, et attribution à la roue correspondante de la position relativement au véhicule du capteur de vitesse fournissant ladite position angulaire.

On notera que l'étape b) prend fin la plupart du temps avec un nombre d'identifiants candidats supérieur au nombre de roues du véhicule, ce qui permet de réduire la durée de la procédure d'initialisation et de commencer la procédure de localisation rapidement.

On notera que les étapes a) et b) sont de étapes d'initialisation et que l'étape c) est une étape de localisation.

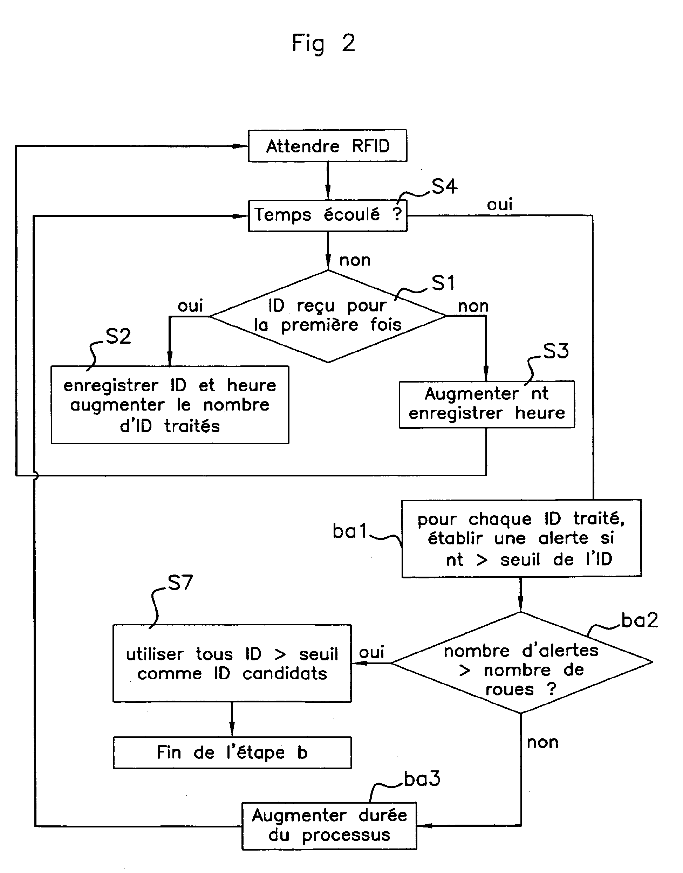

Un mode de réalisation de l'étape **a)** est maintenant expliqué relativement à la figure 2. Pour chaque message reçu par l'unité centrale 10, l'étape **a)** est exécutée. L'étape **a)** comprend la mémorisation, par exemple, durant une première durée prédéterminée comme aux figures 1 à 6, ou à n'importe quel moment, de chaque identifiant ID reçu et le comptage d'un nombre **"nt"** de réceptions d'un même identifiant. Dans le mode de réalisation montré à la figure 2, l'étape **a)** comprend les étapes S1 à S4.

A l'étape **S1**, il est vérifié si un identifiant inclus dans un message reçu est reçu ou non pour la première fois depuis le début de la première durée prédéterminée. Si c'est la première fois, alors à l'étape **S2,** l'identifiant est mémorisé avec l'heure à laquelle il a été reçu et un compte d'identifiant est réglé à « un » pour ledit identifiant. De plus, un nombre **"nlD"** des différents identifiants reçus est augmenté de « un » et mémorisé.

Si l'identifiant reçu avec un message n'est pas reçu pour la première fois durant la première durée prédéterminée, alors à l'étape **S3** un compte **"nt"** dudit identifiant est augmenté de « un », et l'heure à laquelle ledit identifiant a été reçu est mémorisée. Les étapes **S1** à **S3** sont répétées, par exemple jusqu'à la fin de la première durée prédéterminée (ladite fin de la durée prédéterminée est vérifiée à l'étape **S4)** ou, dans des variantes, (non montrées), continûment. Ainsi l'étape a) est limitée dans le temps.

Quand la première durée prédéterminée s'est écoulée l'étape **b)** est lancée. Un premier mode de réalisation de l'étape **b)** comprenant trois étapes **ba1)** à **ba3)** est maintenant décrit toujours relativement à la figure 2.

A l'étape **ba1),** une alerte concernant chaque identifiant est établie si le nombre correspondant **"nt"** est supérieur à une première valeur de seuil.

Il est vérifié à l'étape **ba2)** si le nombre d'alertes établi est au moins égal ou supérieur ou pas au nombre de roues du véhicule. Dans l'affirmative, tous lesdits identifiants sont des identifiants candidats, et l'étape **b)** prend fin sans exécuter l'étape **ba3).** Dans la négative, à l'étape **ba3),** le programme passe à l'étape **a).**

Ainsi les étapes d'initialisation (a et b) sont prolongées si le nombre d'identifiants candidats n'est pas suffisant. Par contre elles sont écourtées dés que le nombre d'identifiant candidats est supérieur au nombre de roues du véhicule (même si on sait fort bien que certains d'entres eux n'appartiennent pas au véhicule).

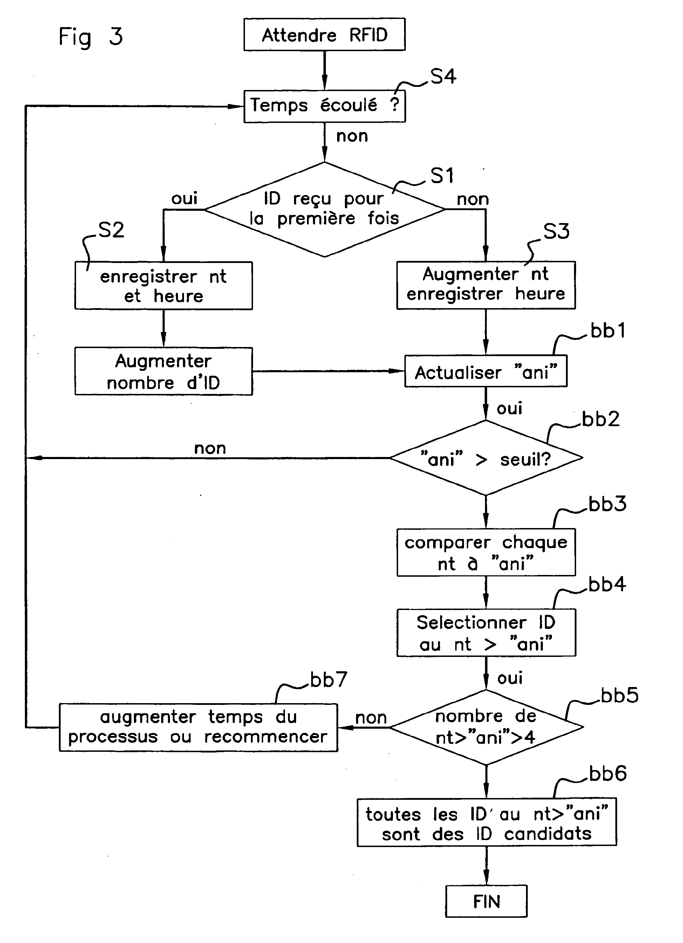

Un autre mode de réalisation de l'étape **b)** est maintenant décrit relativement à la figure 3. Dans ledit mode de réalisation, l'étape **a)** comprend les étapes **S1** à **S4** telle que décrites relativement à la figure 2. Le processus d'analyse statistique (pour déterminer quels sont les identifiants du véhicule) dans ce mode de réalisation de l'étape **b)** comprend les étapes suivantes:
**bb1)** calcul d'un nombre moyen **"ani"** comme la somme de tous les nombres **"nt"** de tous les identifiants enregistrés, divisé par le nombre **"nlD"** de différents identifiants,
**bb2)** vérification si "**ani**" est égal ou supérieur ou pas à une valeur préétablie, et dans la négative, passage à l'étape **a).** Si **"ani"** est supérieur à ladite valeur préfixée, le programme passe à l'étape **bb3).**
**bb3)** comparaison de chacun des nombres **"nt"** au nombre moyen **"ani".**
**bb4)** sélection de tous les identifiants pour lesquels **"nt"** est au moins égal à **"ani".**
**bb5)** vérification du fait que le nombre d'identifiants sélectionnés est ou non au moins égal au nombre de roues (supposé égale à 4, à la figure 3),
**bb6)** si le nombre d'identifiant sélectionnés est au moins égal au nombre de roues, décision que les identifiants sélectionnés sont des identifiants candidats (c'est à dire qu'ils appartiennent au véhicule) et passage à l'étape **c).**
**bb7)** si le nombre d'identifiant sélectionnés est inférieur au nombre de roues, passage à l'étape **a),** c'est à dire augmentation de la durée du processus d'initialisation (ou bien on recommence ce processus).

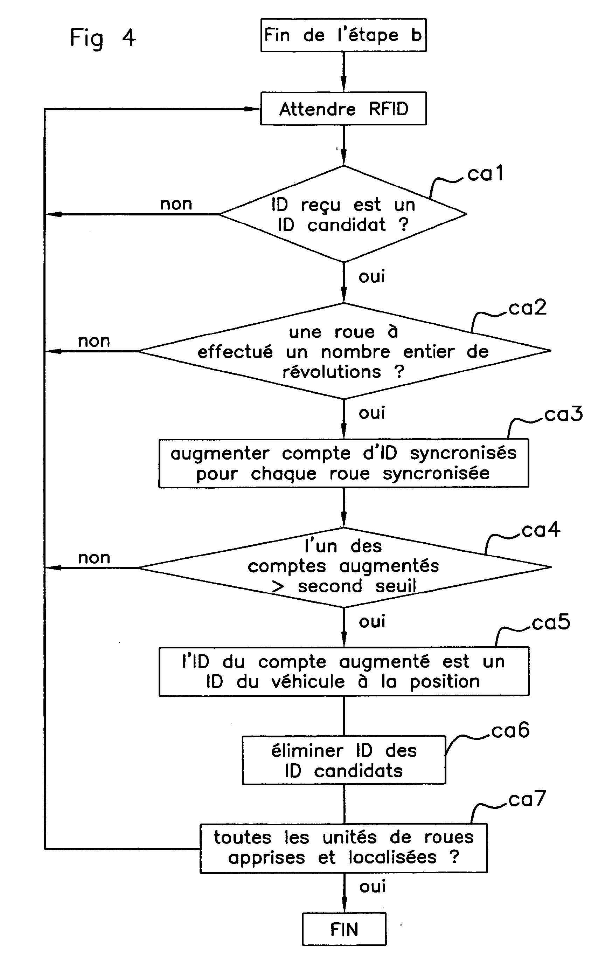

Un premier mode de réalisation de l'étape **c),** dite étape de localisation, est maintenant décrit relativement à la figure 4. Le critère utilisé pour décider qu'un identifiant candidat est un identifiant d'une roue et pour assigner à cet identifiant une position sur le véhicule est le suivant : si un identifiant candidat a ou non été reçu durant une seconde durée prédéterminée après la fin de l'étape **b)** comme identifiant synchronisé un nombre de fois supérieur à une deuxième valeur de seuil prédéterminée alors cet identifiant appartient au véhicule et est associé à une position. Un identifiant synchronisé est un identifiant qui est reçu quand la roue correspondante a effectué un nombre entier de révolutions depuis une dernière réception du même identifiant. Ainsi si l'identifiant candidat est un identifiant synchronisé alors il appartient au véhicule et est positionné sur celui-ci. Par contre si ce n'est pas un identifiant synchronisé il n'appartient pas au véhicule et est rejeté.

Dans le premier mode de réalisation, l'étape c) comprend les étapes **ca1)** à **ca7).**

A l'étape **ca1),** pour chaque identifiant reçu il est vérifié si ledit identifiant est ou non un identifiant candidat. Dans la négative, l'identifiant reçu est rejeté du processus. Dans l'affirmative, le programme passe à l'étape **ca2).**

A l'étape **ca2),** il est vérifié si au moins l'une des roues a effectué ou non un nombre entier de révolutions depuis la dernière heure de réception du même identifiant.

A l'étape **ca3),** si au moins l'une des roues a effectué un nombre entier de révolutions depuis une dernière réception du même identifiant, ledit identifiant devient un identifiant synchronisé et un nombre d'identifiant synchronisés est augmenté de « un » pour chaque identifiant pour chacune des positions de roue qui ont effectué un nombre entier de révolutions.

A l'étape **ca4)**, il est vérifié si l'un des nombres d'identifiant synchronisés est supérieur ou non à une deuxième valeur de seuil prédéterminée.

A l'étape ca5), si un nombre d'identifiant synchronisés devient supérieur à la deuxième valeur de seuil prédéterminée, il est décidé que l'identifiant candidat devient un identifiant d'une unité de roue à la position à laquelle la deuxième valeur de seuil prédéterminée est atteinte. Cet identifiant est ainsi un identifiant appris et sa position relativement au véhicule est connue.

A l'étape **ca6),** cet identifiant appris est éliminé des identifiants candidats.

A l'étape **ca7),** le programme revient aux étapes **a), b), ca1)** à **ca6)** pour les autres identifiants candidats et pour les unités roues qui n'ont pas encore été localisées, jusqu'à ce que toutes les unités roues aient un identifiant et une position.

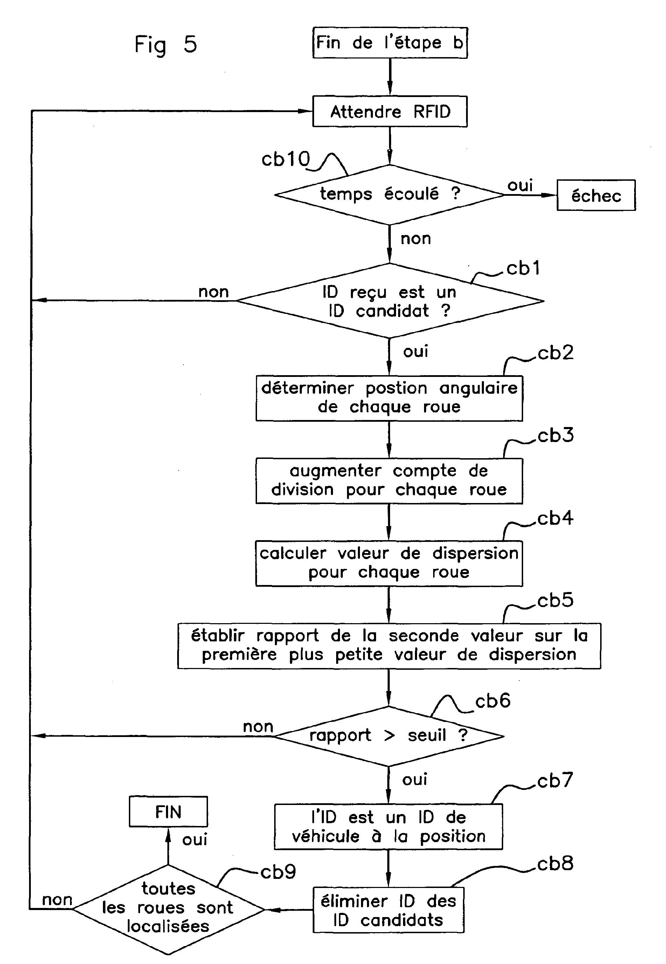

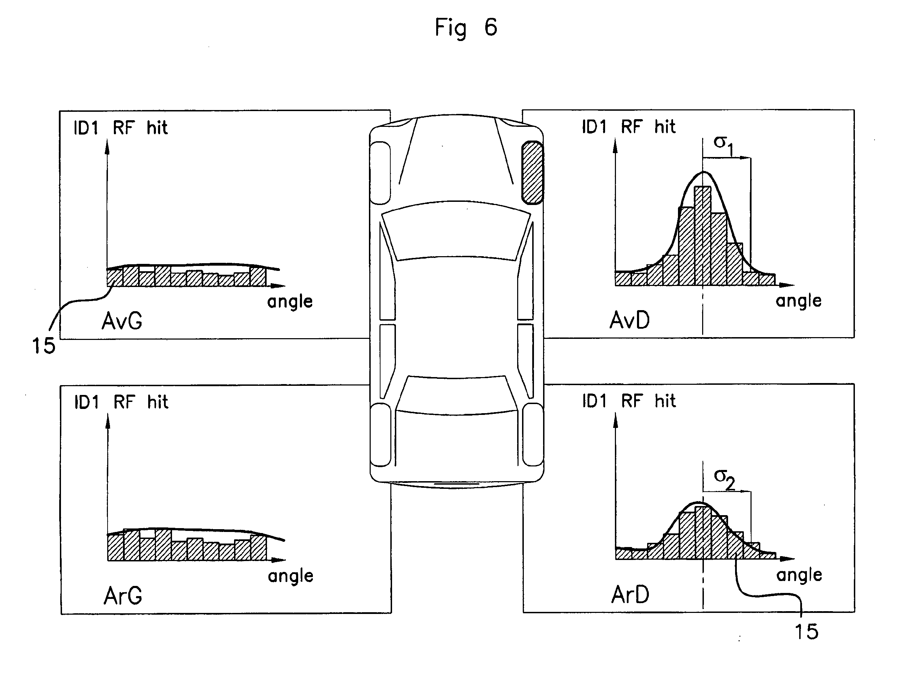

Un autre mode de réalisation de l'étape c) est maintenant décrit relativement aux figures 5 et 6.

La figure 6 est un schéma illustrant des histogrammes de taux d'occurrences par rapport à des intervalles angulaires d'un identifiant candidat, et pour chacune des roues. Le taux d'occurrences pour un identifiant de capteur donné est le rapport du nombre d'émissions synchronisées reçues dans le secteur de position considéré, divisé par, la somme de toutes les émissions synchronisées reçues du capteur considéré.

La figure 6 représente quatre histogrammes correspondants aux quatre positions des roues relativement au véhicule. Pour chaque roue, il existe autant de fois quatre histogrammes que de nombre d'identifiant candidats obtenus à la fin de l'étape b). Chaque histogramme est construit en divisant un intervalle angulaire -180° +180° par la position angulaire d'une roue en intervalles continus et contigus 15, comme cela est représenté à la figure 6.

Le procédé de l'étape c) conformément au mode de réalisation est décrit ici relativement à la figure 5. Le procédé comprend les étapes suivantes :
- à une étape **cb1),** pour chaque identifiant reçu, il est vérifié si un identifiant reçu courant est ou non un identifiant candidat. Dans la négative, l'identifiant reçu courant n'est pas traité. Dans l'affirmative, le programme passe à l'étape **cb2).**
- à l'étape **cb2),** une position (division) angulaire de chaque roue est déterminée pour l'heure (l'instant) à laquelle l'identifiant candidat courant a été reçu, et une position angulaire est sélectionnée en conséquence pour chaque roue. La position angulaire est construite, par exemple, à partir de données provenant du capteur rpm 4a à 4d de chaque roue. Lesdits capteurs sont souvent conçus de façon à envoyer une impulsion pour chaque augmentation d'une fraction de révolution de la roue. Par exemple, 24 impulsions sont envoyées pour chaque rotation complète. Le nombre d'intervalles serait au maximum dans un tel cas 12 entre -180° et 0 et 12 entre 0 et +180°. Un intervalle peut aussi être une augmentation angulaire correspondant à un nombre entier d'impulsions consécutives, par exemple, chaque intervalle peut correspondre à la réception de trois impulsions consécutives, si bien que pour 24 impulsions envoyées pour chaque révolution complète le nombre d'intervalles serait de 4 entre - 180° et 0° et 4 entre 0 et +180°,
- à une étape **cb3),** un compte de chaque position sélectionnée est augmenté de « un » pour les quatre histogrammes dédiés à l'identifiant candidat courant,
- à une étape **cb4),** une valeur de dispersion σ1, σ2, σ3, σ4 est calculée pour chacun des quatre histogrammes. Dans un mode de réalisation préféré, le calcul est effectué uniquement si le nombre total de réceptions dudit identifiant candidat courant est supérieur à une valeur prédéterminée,
- à une étape **cb5),** un rapport est établi entre la première valeur de dispersion et la seconde plus petite valeur de dispersion de l'identifiant courant. Par exemple, dans l'exemple montré à la figure 6, la plus petite valeur de dispersion est σ1 et la seconde plus petite valeur de dispersion est σ2. Le rapport calculé est alors R = σ 2/σ1,
- à une étape **cb6),** le rapport R est comparé à une valeur de seuil,
- à une étape **cb7),** si R est au moins égal à la valeur de seuil, l'identifiant candidat courant est considéré comme un identifiant du véhicule et l'unité roue répondant audit identifiant candidat courant est positionnée à la position correspondant à la dispersion σ1. Si le rapport n'est pas inférieur à la valeur de seuil, le processus continue,
- à une étape **cb8),** quand il a été décidé que l'identifiant courant est un identifiant du véhicule, l'identifiant courant est éliminé des identifiants candidats,
- à une étape **cb9),** il est vérifié si les quatre roues ont ou non été apprises et positionnées. Dans la négative, le processus continue pour les identifiants candidats qui n'ont pas encore été éliminés comme étant un identifiant du véhicule et pour les roues qui n'ont pas encore été localisées. Dans l'affirmative le processus est terminé et
- à une étape **cb10)**, si le processus n'est pas terminé au terme de la durée prédéterminée commençant à la fin de l'étape b), le processus a échoué.

Ainsi l'initialisation et la localisation sont effectuées partiellement en même temps. En fait, lorsque la localisation est terminée l'initialisation l'est forcément aussi.

On notera que dans l'exemple décrit la phase d'initialisation est une phase effectuée par des calculs statistiques. Ainsi les identifiants reçus le plus souvent par l'unité centrale du véhicule sont considérés comme étant ceux du véhicule. Une phase de localisation des identifiants retenus (identifiants candidats) est ensuite réalisée en utilisant l'occurrence d'une synchronisation entre la réception d'un nouveau message émis par l'unité roue et le fait qu'une des roues du véhicule se trouve avoir réalisé un nombre entier de tour entre deux occurrences successives d'un même identifiant.

On notera, que la phase d'initialisation basée sur des calculs statistiques peut être de durée très réduite et que dans ce cas, la phase de localisation décrite est effectuée d'une part pour localiser les identifiants du véhicule et d'autre part pour acquérir les identifiants de ce véhicule.

En effet dans ce cas la phase de localisation prend en compte quasiment tous les identifiants reçus un certain nombre de fois, même s'ils sont en surnombre par rapport au nombre de roues du véhicule.

La localisation de chacun des identifiants (par un procédé de synchronisation du message dans lequel ils sont contenus et du fait qu'entre deux messages comportant cet identifiant une seule des roues du véhicule a réalisé un nombre entier de tours), permet en même temps de réaliser la phase d'initialisation. En effet dés que l'on a réussi à localiser n identifiants pour les positions des n roues du véhicule, ces identifiants appartiennent forcément au véhicule. Ainsi la phase d'initialisation est fortement réduite et la phase de localisation vient très rapidement trier les identifiants qui appartiennent au véhicule ou pas.

En variante, il est possible de traiter tous les identifiants reçus uniquement à l'aide de la phase de localisation. Dans ce cas les étapes a) et b) ne réalisent que le recueil des identifiants qui sont tous considérés comme des identifiants candidats.

## Revendications

1. Procédé de détermination d'identités (ID) d'unités roues d'un véhicule et des positions relativement au véhicule des roues sur lesquelles lesdites unités roues sont montées, le véhicule étant équipé d'un capteur de vitesse pour chaque roue, chaque unité roue étant équipée de moyens pour transmettre à une position angulaire prédéterminée de la roue correspondante autour de son axe (18), un message comportant l'identifiant de l'unité roue, une unité centrale de traitement recevant ledit message et une information desdits capteurs de roues,
**caractérisé en ce que** le procédé comprend les étapes suivantes :
a) comptage, pour chaque identifiant, d'un nombre **"nt"** de réceptions dudit identifiant,
b) traitement statistique des nombres **"nt"** afin de déterminer parmi toutes les identifiants reçus ceux qui sont le plus probablement l'identifiant d'une unité roue du véhicule, les identifiants devenant des identifiants candidats du véhicule, le processus statistique prenant fin quand le nombre d'identifiants candidats est au moins égal au nombre de roues du véhicule et
c) détermination qu'un identifiant candidat est l'identifiant d'une unité roue si ledit identifiant candidat répond à un critère prédéterminé relativement à au moins un instant de réception dudit identifiant candidat et à la position angulaire d'une roue audit instant, et attribution à la roue correspondante de la position relativement au véhicule du capteur de vitesse fournissant ladite position angulaire.

2. Procédé selon la revendication 1, dans lequel, à l'étape **b)**
- un identifiant est accepté comme identifiant candidat si, pour ledit identifiant, le nombre **"nt"** est supérieur à une première valeur de seuil prédéterminée et si le nombre d'identifiants différents pour lesquels le nombre **"nt"** est supérieur à ladite première valeur de seuil prédéterminée est au moins égal au nombre de roues du véhicule.

3. Procédé selon la revendication 1, dans lequel, à l'étape **b)**
- un identifiant est accepté comme identifiant candidat si, pour ledit identifiant, le nombre **"nt"** est supérieur à une valeur moyenne **"ani"** des nombres **"nt"** et si le nombre d'identifiant différents pour lesquels le nombre **"nt"** est supérieur à **"ani"** est au moins égal au nombre de roues du véhicule.

4. Procédé selon l'une quelconque des revendications 1 à 3, dans lequel l'étape **b)** comprend des étapes **ba1)** à **ba3),** et dans lequel:
- à l'étape **ba1),** des registres de chaque enregistrement du nombre courant d'identifiants différents, **"nlD",** sont vérifiés et une alerte est établie pour chaque identifiant chaque fois qu'un nombre **"nt"** pour l'un des identifiants est supérieur à une première valeur de seuil,
- à l'étape **ba2)** il est vérifié si le nombre d'alertes établi est au moins égal ou supérieur ou pas au nombre de roues du véhicule, et dans l'affirmative, toutes lesdits identifiants sont des identifiants candidats, et l'étape **b)** est terminée,
- à l'étape **ba3),** si la condition de l'étape **ba2)** n'est pas vérifiée, les étapes **a)** et **b)** sont continuées pendant une durée prédéterminée supplémentaire jusqu'à ce que la condition de l'étape **ba2)** soit vérifiée.

5. Procédé selon l'une quelconque des revendications 1 à 4, dans lequel l'étape **b)** comprend les étapes bb1) à **bb7),** et dans lequel :
- à l'étape **bb1)** un nombre moyen **"ani"** des nombres **"nt"** est calculé,
- à l'étape **bb2),** il est vérifié si **"ani"** est au moins égal ou non à une valeur préétablie, et dans la négative, le programme revient aux étapes **a)** et **bb1)** jusqu'à ce que le nombre moyen **"ani"** soit au moins égal à ladite valeur préfixée,
- si **"ani"** est supérieur à ladite valeur préfixée, à l'étape **bb3)** chacun des nombres **"nt"** est comparé au nombre moyen **"ani",**
- à l'étape **bb4),** toutes les identifications pour lesquelles **"nt"** est au moins égal à **"ani"** sont sélectionnées,
- à l'étape **bb5),** il est vérifié si le nombre de tous les identifiants sélectionnés est ou non au moins égal au nombre de roues,
- à l'étape **bb6)** si le nombre d'identifiants sélectionnés est au moins égal au nombre de roues, il est décidé que les identifiants sélectionnés sont des identifiants candidats et l'étape **b)** est terminée,
- dans la négative, à l'étape **bb7)** si le nombre d'identifiants sélectionnés est inférieur au nombre de roues, le programme revient aux étapes **a)** et **bb1)** à **bb6)** jusqu'à ce que le nombre d'identifiants sélectionnés soit au moins égal au nombre de roues.

6. Procédé selon l'une quelconque des revendications 1 à 5, dans lequel, à l'étape c), le critère est:
- si un identifiant candidat a ou non été reçu durant une seconde durée prédéterminée commençant après la fin de l'étape **b)** comme identifiant synchronisé un nombre supérieur de fois à une deuxième valeur de seuil prédéterminée, un identifiant synchronisé étant un identifiant qui est reçu quand la roue correspondante a effectué un nombre entier de révolutions depuis une dernière réception du même identifiant.

7. Procédé selon l'une quelconque des revendications 1 à 5, dans lequel, à l'étape **c),** le critère est:
- si un rapport, entre une seconde et une première plus petite valeur représentative d'une dispersion de différentes positions angulaires courantes calculées pour chaque identifiant candidat reçu courant et pour chaque unité roue du véhicule, pour l'une des unités roues, est ou non égal ou supérieur à une troisième valeur de seuil prédéterminée, une position angulaire courante étant la position angulaire à laquelle un identifiant courant est reçu.

8. Procédé selon l'une quelconque des revendications 1 à 5, dans lequel l'étape c) comprend les étapes **ca1)** à **ca7),** dans lequel:
- à l'étape **ca1),** pour chaque identifiant reçu il est vérifié si ledit identifiant est ou non un identifiant candidat, dans la négative, l'identifiant reçu est rejeté,
- dans l'affirmative, à l'étape **ca2),** il est vérifié si au moins l'une des roues a effectué ou non un nombre entier de révolutions depuis la dernière réception du même identifiant,
- à l'étape **ca3),** si au moins l'une des roues a effectué un nombre entier de révolutions depuis une dernière réception du même identifiant, ledit identifiant devient un identifiant synchronisé et un nombre d'identifiant synchronisés est augmenté de « un » pour chaque identifiant pour chacune des positions de roue qui ont effectué un nombre entier de révolutions,
- à l'étape **ca4),** il est vérifié si l'un des nombres augmentés d'identifiants synchronisés est supérieur ou non à une deuxième valeur de seuil prédéterminée,
- à l'étape **ca5),** si un nombre augmenté courant d'identifiants synchronisés devient supérieur à la deuxième valeur de seuil prédéterminée, il est décidé que ledit identifiant candidat devient un identifiant d'une unité roue du véhicule à la position à laquelle la deuxième valeur de seuil prédéterminée est atteinte, et
- à l'étape **ca6),** l'identifiant appris est éliminé des identifiants candidats.
- à l'étape **ca7),** le programme revient aux étapes **a), b), ca1)** à **ca6)** pour le reste des identifiants candidats et pour les unités roues qui n'ont pas encore été localisées, jusqu'à ce que toutes les unités roues aient un identifiant et une position relativement au véhicule.

9. Procédé selon l'une quelconque des revendications 1 à 5, dans lequel l'étape **c)** comprend les étapes **cb1)** à **cb10),** dans lequel
- à l'étape **cb1),** pour chaque identifiant reçu il est vérifié si ledit identifiant reçu courant est ou non un identifiant candidat, dans la négative, l'identifiant reçu courant n'est pas traité,
- dans l'affirmative, à l'étape **cb2),** une position angulaire de chaque roue est déterminée pour l'instant auquel l'identifiant candidat courant a été reçu, et une division angulaire d'un intervalle total - 180° +180° est sélectionnée en conséquence pour chaque roue.
- à l'étape **cb3),** un compte de chaque division sélectionné est augmenté de "un" dans la division de chaque roue le compte étant dédié à l'identifiant candidat courant,
- à l'étape **cb4),** une valeur de dispersion σ1, σ2, σ3, σ4 est calculée pour chacun des histogrammes construits en comptant le nombre d'identifiants enregistrés dans une division,
- à l'étape **cb5),** un rapport R est établi entre la première et la seconde plus petite valeur de dispersion de l'identifiant courant,
- à l'étape **cb6),** le rapport R est comparé à une valeur de seuil,
- à l'étape **cb7),** si R est égal ou supérieur à la valeur de seuil, l'identifiant candidat courant est considéré comme un identifiant du véhicule et l'unité roue répondant audit identifiant candidat courant est positionnée à la position correspondant à la plus petite dispersion, si le rapport n'est pas égal ou supérieur à la valeur de seuil le processus continue,
- à l'étape **cb8),** quand il a été décidé que l'identifiant courant est un identifiant du véhicule, l'identifiant courant est éliminé des identifiants candidats,
- à l'étape **cb9),** il est vérifié si les quatre roues ont été apprises et positionnées ou pas, dans la négative, le processus continue pour les identifiants candidats qui n'ont pas encore été éliminés comme étant un identifiant du véhicule et pour les roues qui n'ont pas encore été localisées, dans l'affirmative le processus est terminé,
- à l'étape **cb10),** si le processus n'est pas terminé au terme de la durée prédéterminée commençant à la fin de l'étape **b),** le processus a échoué.

10. Procédé selon l'une quelconque des revendications 1 à 9, dans lequel l'étape **a)** comprend des étapes S1 à S4 dans lesquelles :
- à l'étape **S1,** il est vérifié si un identifiant faisant partie d'un message courant reçu est reçu ou non pour la première fois depuis le début du processus,
- si c'est la première fois, à l'étape **S2,** l'identifiant est mémorisé en association avec l'instant auquel il a été reçu et un compte d'identifiant est augmenté de "un" pour ledit identifiant, en outre un compte du nombre **"nlD"** de différents identifiants reçus est alors mémorisé, si l'identifiant qui est reçu avec un message n'est pas reçu pour la première fois durant le processus alors,
- à l'étape **S3,** un compte **"nt"** dudit identifiant est augmenté de "un", et l'instant auquel le dit identifiant a été reçu est mémorisé,
- les étapes **S1** à **S3** continuent jusqu'à la fin de la durée prédéterminée, ladite fin de la durée prédéterminée étant vérifiée à l'étape **S4** et commençant à l'étape **b)** quand la durée prédéterminée s'est écoulée.

11. Dispositif de détermination d'identités (ID) d'unités roues d'un véhicule et des positions relativement au véhicule des roues sur lesquelles lesdites unités roues sont montées, le véhicule étant équipé d'un capteur de vitesse pour chaque roue, chaque unité roue étant équipée de moyens pour transmettre à une position angulaire prédéterminée de la roue correspondante autour de son axe, un message comportant l'identifiant de l'unité roue, une unité centrale de traitement recevant ledit message et une information desdits capteurs de vitesse,
**caractérisé en ce qu'**il comprend :
a) un moyen de comptage, pour chaque identifiant, d'un nombre **"nt"** de réceptions dudit identifiant,
b) un moyen de traitement statistique des nombres **"nt"** afin de déterminer parmi tous les identifiants reçus ceux qui sont le plus probablement l'identifiant d'une unité roue du véhicule, les identifiants devenant des identifiants candidats du véhicule, le processus statistique prenant fin quand le nombre d'identifiants candidats est au moins égal au nombre de roues du véhicule et
c) un moyen de détermination qu'un identifiant candidat est l'identifiant d'une unité roue si ledit identifiant candidat répond à un critère prédéterminé relativement à au moins un instant de réception dudit identifiant candidat et à la position angulaire d'une roue audit instant, et d'attribution à la roue correspondante de la position relativement au véhicule du capteur de vitesse fournissant ladite position angulaire.

## Patentansprüche

1. Verfahren zur Bestimmung von Identitäten (ID) von Radeinheiten eines Fahrzeugs und der Lage der Räder auf denen die Radeinheiten angebracht sind in Bezug auf das Fahrzeug, wobei das Fahrzeug mit einem Geschwindigkeitssensor für jedes Rad ausgestattet ist, jede Radeinheit mit Mitteln zum Übertragen einer die ID der Radeinheit umfassenden Nachricht bei einer vorbestimmten Winkelstellung des jeweiligen Rades um seine Achse (18) ausgerüstet ist und eine zentrale Verarbeitungseinheit die Nachricht und eine Information der Radsensoren empfängt,
**dadurch gekennzeichnet, dass** das Verfahren die folgenden Schritte umfasst:
a) Zählen einer Anzahl **"nt"** der Empfangsvorgänge der ID für jede ID,
b) statistische Verarbeitung der Anzahlen **"nt",** um unter allen empfangenen ID's diejenigen zu bestimmen, welche am wahrscheinlichsten die ID einer Radeinheit des Fahrzeugs sind, wobei die ID's ID-Kandidaten des Fahrzeugs werden und der statistische Prozess endet, wenn die Anzahl der ID-Kandidaten mindestens gleich der Anzahl der Räder des Fahrzeugs ist , und
c) Feststellung dass ein ID-Kandidat die ID einer Radeinheit ist, wenn der ID-Kandidat einem vorbestimmten Kriterium in Bezug auf mindestens eine Empfangszeit des ID-Kandidaten und auf die Winkelstellung eines Rades zu diesem Zeitpunkt entspricht, und Zuschreibung der Lage des die Winkelstellung liefernden Geschwindigkeitssensors in Bezug auf das Fahrzeug an das jeweilige Rad.

2. Verfahren gemäß Anspruch 1, bei welchem in dem Schritt **b)**
• eine ID als ID-Kandidat akzeptiert wird, wenn für diese ID die Anzahl **"nt"** höher als ein erster vorbestimmter Schwellenwert ist und wenn die Anzahl der verschiedenen ID's, für welche die Anzahl **"nt"** höher als der erste vorbestimmte Schwellenwert ist, mindestens gleich der Anzahl der Räder des Fahrzeugs ist.

3. Verfahren gemäß Anspruch 1, bei welchem in dem Schritt **b)**
• eine ID als ID-Kandidat akzeptiert wird, wenn für diese ID die Anzahl **"nt"** höher als ein Mittelwert **"ani"** der Anzahlen **"nt"** ist, und die Anzahl der verschiedenen ID's, für welche die Anzahl **"nt"** höher als **"ani"** ist, mindestens gleich der Anzahl der Räder des Fahrzeugs ist.

4. Verfahren gemäß irgendeinem der Ansprüche 1 bis 3, bei welchem der Schritt **b)** die Schritte **ba1)** bis **ba3)** umfasst und bei welchem
• in dem Schritt **ba1)** Register von jeder Registrierung der aktuellen Anzahl von verschiedenen ID's **"nID"** überprüft werden und jedes Mal wenn eine Anzahl **"nt"** für eine der ID's höher als ein erster Schwellenwert ist, ein Hinweis für jede ID erstellt wird,
• in dem Schritt **ba2)** überprüft wird, ob die Anzahl der erstellten Hinweise mindestens gleich oder höher oder nicht der Anzahl der Räder des Fahrzeugs ist, und wenn ja alle ID's ID-Kandidaten sind und der Schritt **b)** beendet ist,
• in dem Schritt **ba3)** wenn die Bedingung des Schrittes **ba2)** nicht erfüllt ist, die Schritte **a)** und **b)** während einer vorbestimmten zusätzlichen Dauer fortgesetzt werden, bis die Bedingung des Schrittes **ba2)** erfüllt ist.

5. Verfahren gemäß irgendeinem der Ansprüche 1 bis 4, bei welchem der Schritt **b)** die Schritte **bb1)** bis **bb7)** umfasst und bei welchem
• in dem Schritt **bb1)** eine mittlere Anzahl **"ani"** der Anzahlen **"nt"** berechnet wird,
• in dem Schritt **bb2)** überprüft wird, ob **"ani"** mindestens gleich einem vorbestimmten Wert ist oder nicht, und wenn nicht das Programm zu den Schritten **a)** und **bb1)** zurückkehrt, bis die mittlere Anzahl **"ani"** mindestens gleich dem vorfixierten Wert ist,
• wenn **"ani"** höher als der vorfixierte Wert ist, in dem Schritt **bb3)** jede der Anzahlen **"nt"** mit der mittleren Anzahl **"ani"** verglichen wird,
• in dem Schritt **bb4)** alle ID's für welche **"nt"** mindestens gleich **"ani"** ist, ausgewählt werden,
• in dem Schritt **bb5)** überpüft wird, ob die Anzahl aller ausgewählten ID's mindestens gleich der Anzahl der Räder ist oder nicht,
• in dem Schritt **bb6),** wenn die die Anzahl der ausgewählten ID's mindestens gleich der Anzahl der Räder ist, entschieden wird, dass die ausgewählten ID's ID-Kandidaten sind und der Schritt **b)** beendet wird,
• im negativen Fall in dem Schritt **bb7)** das Programm zu den Schritten **a)** und **bb1)** bis **bb6)** zurückkehrt, wenn die Anzahl der ausgewählten ID's kleiner ist als die Anzahl der Räder, bis die Anzahl der ausgewählten ID's mindestens gleich der Anzahl der Räder ist.

6. Verfahren gemäß irgendeinem der Ansprüche 1 bis 5, bei welchem in dem Schritt **c)** das Kriterium ist:
• ob ein ID-Kandidat während einer zweiten vorbestimmten Zeitdauer, die nach dem Ende des Schrittes **b)** beginnt, als synchronisierte ID in einer Anzahl mehrfach höher als ein zweiter vorbestimmter Schwellenwert empfangen wurde oder nicht, wobei eine synchronisierte ID eine ID ist, welche empfangen wird, wenn das betreffende Rad eine ganze Zahl von Umdrehungen seit dem letzten Empfang der gleichen ID ausgeführt hat.

7. Verfahren gemäß irgendeinem der Ansprüche 1 bis 5, bei welchem in dem Schritt **c)** das Kriterium ist:
• ob ein Verhältnis zwischen einem zweiten und einem ersten kleineren repräsentativen Wert einer Verteilung von verschiedenen aktuellen Winkelstellungen, berechnet für jeden aktuell empfangenen ID-Kandidaten und für jede Radeinheit des Fahrzeugs, für eine der Radeinheiten gleich oder höher ist wie ein dritter vorbestimmter Schwellenwert oder nicht, wobei eine aktuelle Winkelstellung die Winkelstellung ist, bei welcher eine aktuelle ID empfangen wird.

8. Verfahren gemäß irgendeinem der Ansprüche 1 bis 5, bei welchem der Schritt **c)** die Schritte **ca1)** bis **ca7)** umfasst und bei welchem
• in dem Schritt **ca1)** wird für jede empfangene ID überprüft, ob die ID ein ID-Kandidat ist oder nicht, wenn nicht, wird die empfangene ID zurückgewiesen,
• wenn ja, wird in dem Schritt **ca2)** überprüft, ob mindestens eines der Räder seit dem letzten Empfang derselben ID eine ganze Zahl von Umdrehungen ausgeführt hat oder nicht,
• in dem Schritt **ca3)** wird, wenn mindestens eines der Räder seit einem letzten Empfang derselben ID eine ganze Zahl von Umdrehungen ausgeführt hat, die ID eine synchronisierte ID, und eine Anzahl von synchronisierten ID's wird für jede der Radpositionen, welche eine ganze Zahl von Umdrehungen ausgeführt haben, für jede ID um "eins" erhöht,
• in dem Schritt **ca4)** wird überprüft, ob eine der erhöhten Anzahlen von synchronisierten ID's höher ist als ein zweiter vorbestimmter Schwellwert oder nicht,
• in dem Schritt **ca5** wird, wenn eine aktuelle erhöhte Anzahl von synchronisierten ID's größer ist als der zweite vorbestimmte Schwellwert, entschieden dass der ID-Kandidat eine ID einer Radeinheit des Fahrzeugs an der Position wird, in welcher der zweite vorbestimmte Schwellwert erreicht wird,
• in dem Schritt **ca6)** wird die erkannte ID aus den ID-Kandidaten eliminiert,
• in dem Schritt **ca7)** geht das Programm für den Rest der ID-Kandidaten und die Radeinheiten, die noch nicht lokalisiert worden sind, zu den Schritten **a), b), ca1)** bis **ca6)** zurück, bis alle Radeinheiten eine ID und eine Lage in Bezug auf das Fahrzeug haben.

9. Verfahren gemäß irgendeinem der Ansprüche 1 bis 5, bei welchem der Schritt **c)** die Schritte **cb1)** bis **cb10)** umfasst und bei welchem
• in dem Schritt **cb1)** für jede empfangene ID überprüft wird, ob die aktuelle empfangene ID ein ID-Kandidat ist oder nicht, wenn nicht, wird die empfangene aktuelle ID nicht verarbeitet,
• wenn ja, wird in dem Schritt **cb2)** eine Winkelstellung von jedem Rad für den Augenblick bestimmt, in dem die aktuelle ID-Kandidat empfangen wurde, und dementsprechend wird für jedes Rad eine Winkelteilung eines gesamten Intervalls - 180° +180° ausgewählt,
• in dem Schritt **cb3)** wird ein Zähler von jeder ausgewählten Teilung um "eins" erhöht, wobei in der Teilung von jedem Rad der Zähler dem aktuellen ID-Kandidaten zugeordnet ist,
• in dem Schritt **cb4)** wird für jedes der konstruierten Histogramme ein Dispersionswert □1, □□, □□, □□, berechnet, indem die Anzahl der in einer Teilung erfassten ID's gezählt wird,
• in dem Schritt **cb5)** wird ein Verhältnis **R** zwischen dem ersten und dem zweiten, kleineren Dispersionswert der aktuellen ID hergestellt,
• in dem Schritt **cb6)** wird das Verhältnis **R** mit einem Schwellenwert verglichen,
• in dem Schritt **cb7)** wird, wenn R gleich dem oder höher als der Schwellenwert ist, der aktuelle ID-Kandidat als eine ID des Fahrzeugs betrachtet, und die dem aktuellen ID-Kandidaten entsprechende Radeinheit wird in der Position entsprechend der kleinsten Verteilung positioniert, wenn das Verhältnis nicht gleich dem oder höher als der Schwellenwert ist, wird der Vorgang fortgesetzt,
• in dem Schritt **cb8)** wird die ID aus den ID-Kandidaten eliminiert, wenn entschieden wurde, dass die aktuelle ID eine ID des Fahrzeugs ist,
• in dem Schritt **cb9)** wird überprüft, ob die vier Räder erkannt und positioniert wurden oder nicht, wenn nicht, läuft der Vorgang für die ID-Kandidaten, die als ID des Fahrzeugs noch nicht eliminiert wurden und für die Räder die noch nicht lokalisiert wurden weiter, wenn ja, wird der Vorgang beendet,
• in dem Schritt **cb10)** ist der Vorgang fehlgeschlagen., wenn der Vorgang am Ende der vorbestimmten, am Ende des Schrittes **b)** beginnenden Dauer nicht abgeschlossen ist.

10. Verfahren gemäß irgendeinem der Ansprüche 1 bis 9, bei welchem der Schritt **a)** die Schritte **S1** bis **S4** umfasst, in denen:
• in dem Schritt **S1** überprüft wird, ob eine ID, welche Teil einer aktuell empfangenen Nachricht ist, zum ersten Mal seit dem Beginn des Vorgangs empfangen wurde oder nicht,
• wenn es das erste Mal ist, die ID verknüpft mit dem Zeitpunkt zu dem sie empfangen wurde in dem Schritt **S2** gespeichert wird und ein ID-Zähler um "eins" für die ID erhöht wird, außerdem wird dann ein Zähler der Anzahl **"nID"** verschiedener empfangener ID's gespeichert, wenn die ID, welche mit einer Nachricht empfangen wurde, nicht das erste Mal während des Prozesses empfangen wurde,
• in dem Schritt **S3** wird ein Zähler **"nt"** der ID um "eins" erhöht, und es wird der Zeitpunkt gespeichert, zu dem die ID empfangen wurde,
• die Schritte **S1** bis **S3** laufen bis zu dem Ende der vorbestimmten Dauer weiter, wobei das Ende der vorbestimmten Dauer in dem Schritt **S4** und mit dem Schritt **b)** beginnend festgestellt wird, wenn die vorbestimmte Dauer abgelaufen ist.

11. Vorrichtung zur Bestimmung von Identitäten (ID) von Radeinheiten eines Fahrzeugs und der Lage der Räder auf denen die Radeinheiten angebracht sind in Bezug auf das Fahrzeug, wobei das Fahrzeug mit einem Geschwindigkeitssensor für jedes Rad ausgestattet ist, jede Radeinheit mit Mitteln zum Übertragen einer die ID der Radeinheit umfassenden Nachricht bei einer vorbestimmten Winkelstellung des jeweiligen Rades um seine Achse ausgerüstet ist und eine zentrale Verarbeitungseinheit die Nachricht und eine Information der Radsensoren empfängt,
**dadurch gekennzeichnet, dass** das Verfahren die folgenden Schritte umfasst:
a) ein Mittel zum Zählen einer Anzahl **"nt"** der Empfangsvorgänge der ID für jede ID,
b) ein Mittel zur statistischen Verarbeitung der Anzahlen **"nt",** um unter allen empfangenen ID's diejenigen zu bestimmen, welche am wahrscheinlichsten die ID einer Radeinheit des Fahrzeugs sind, wobei die ID's ID-Kandidaten des Fahrzeugs werden und der statistische Prozess endet, wenn die Anzahl der ID-Kandidaten mindestens gleich der Anzahl der Räder des Fahrzeugs ist , und
c) ein Mittel zur Feststellung, dass ein ID-Kandidat die ID einer Radeinheit ist, wenn der ID-Kandidat einem vorbestimmten Kriterium in Bezug auf mindestens eine Empfangszeit des ID-Kandidaten und auf die Winkelstellung eines Rades zu diesem Zeitpunkt entspricht, und Zuschreibung der Lage des die Winkelstellung liefernden Geschwindigkeitssensors in Bezug auf das Fahrzeug an das jeweilige Rad.

## Claims

1. Method for determining identities (ID) of wheel units of a vehicle and positions relative to the vehicle of the wheels on which said wheel units are fitted, the vehicle being equipped with a speed sensor for each wheel, each wheel unit being equipped with means for transmitting at a predetermined angular position of the corresponding wheel about its axis (18) a message including the identifier of the wheel unit, a central processing unit receiving said message and information from said speed sensors,
**characterized in that** the method comprises the following steps:
a) counting, for each identifier, of a number **"nt"** of receptions of said identifier,
b) statistical processing of the numbers **"nt"** in order to determine from among all the identifiers received those which are most probably the identifier of a wheel unit of the vehicle, the identifiers becoming candidate identifiers for the vehicle, the statistical process ending when the number of candidate identifiers is at least equal to the number of wheels of the vehicle, and
c) determining that a candidate identifier is the identifier of a wheel unit if said candidate identifier meets a predetermined criterion relating to at least one instant of reception of said candidate identifier and to the angular position of a wheel at said instant, and assigning to the corresponding wheel the position relative to the vehicle of the speed sensor supplying said angular position.

2. Method according to Claim 1, in which, at step **b)**
- an identifier is accepted as candidate identifier if, for said identifier, the number **"nt"** is greater than a first predetermined threshold value and if the number of different identifiers for which the number **"nt"** is greater than said first predetermined threshold value is at least equal to the number of wheels of the vehicle.

3. Method according to Claim 1, in which, at step **b)**
- an identifier is accepted as candidate identifier if, for said identifier, the number **"nt"** is greater than an average value **"ani"** of the numbers **"nt"** and if the number of different identifiers for which the number **"nt"** is greater than **"ani"** is at least equal to the number of wheels of the vehicle.

4. Method according to any one of Claims 1 to 3, in which step **b)** comprises steps **ba1)** to **ba3),** and in which:
- at step **ba1),** registers for each registering of the current number of different identifiers, **"nID",** are checked and an alert is issued for each identifier each time a number **"nt"** for one of the identifiers is greater than a first threshold value,
- at step **ba2),** a check is made as to whether or not the number of alerts issued is at least equal to or greater than the number of wheels of the vehicle, and if yes, all said identifiers are candidate identifiers and step **b)** is terminated,
- at step **ba3),** if the condition of step **ba2)** is not satisfied, steps **a)** and **b)** are continued over an additional predetermined duration until the condition of step **ba2)** is satisfied.

5. Method according to any one of Claims 1 to 4, in which step **b)** comprises steps **bb1)** to **bb7),** and in which :
- at step **bb1),** an average number **"ani"** of the numbers **"nt"** is calculated,
- at step **bb2),** a check is made as to whether or not **"ani"** is at least equal to a pre-established value, and if not, the program returns to steps **a)** and **bb1)** until the average number **"ani"** is at least equal to said preset value,
- if **"ani"** is greater than said preset value, at step **bb3)** each of the numbers **"nt"** is compared with the average number **"ani",**
- at step **bb4),** all the identifications for which **"nt"** is at least equal to **"ani"** are selected,
- at step **bb5),** a check is made as to whether or not the number of all the selected identifiers is at least equal to the number of wheels,
- at step **bb6),** if the number of selected identifiers is at least equal to the number of wheels, it is decided that the selected identifiers are candidate identifiers and step **b)** is terminated,
- if not, at step **bb7),** if the number of selected identifiers is less than the number of wheels, the program returns to steps **a)** and **bb1)** to **bb6)** until the number of selected identifiers is at least equal to the number of wheels.

6. Method according to any one of Claims 1 to 5, in which, at step **c),** the criterion is:
- whether or not a candidate identifier has been received during a second predetermined duration starting after the end of step **b)** as a synchronized identifier a greater number of times than a second predetermined threshold value, a synchronized identifier being an identifier which is received when the corresponding wheel has performed a whole number of revolutions since a last reception of the same identifier.

7. Method according to any one of Claims 1 to 5, in which, at step **c),** the criterion is:
- whether or not a ratio, between a second and a first smaller value representative of a dispersion of different current angular positions calculated for each current received candidate identifier and for each wheel unit of the vehicle, for one of the wheel units, is equal to or greater than a third predetermined threshold value, a current angular position being the angular position at which a current identifier is received.

8. Method according to any one of Claims 1 to 5, in which step **c)** comprises steps **ca1)** to **ca7),** in which:
- at step **ca1),** for each received identifier, a check is made as to whether or not said identifier is a candidate identifier; if not, the received identifier is rejected,
- if yes, at step **ca2),** a check is made as to whether or not at least one of the wheels has performed a whole number of revolutions since the last reception of the same identifier,
- at step **ca3),** if at least one of the wheels has performed a whole number of revolutions since last reception of the same identifier, said identifier becomes a synchronized identifier and a synchronized identifier number is incremented by "one" for each identifier for each of the wheel positions which have performed a whole number of revolutions,
- at step **ca4),** a check is made as to whether or not one of the increased numbers of synchronized identifiers is greater than a second predetermined threshold value,
- at step **ca5),** if a current increased number of synchronized identifiers becomes greater than the second predetermined threshold value, it is decided that said candidate identifier becomes an identifier of a wheel unit of the vehicle at the position at which the second predetermined threshold value is reached, and
- at step **ca6),** the learnt identifier is eliminated from the candidate identifiers,
- at step **ca7),** the program returns to steps **a), b), ca1)** to **ca6)** for the remainder of the candidate identifiers and for the wheel units which have not yet been located, until all the wheel units have an identifier and a position relative to the vehicle.

9. Method according to any one of Claims 1 to 5, in which step **c)** comprises steps **cb1)** to **cb10),** in which
- at step **cb1),** for each identifier received, a check is made as to whether or not said current received identifier is a candidate identifier; if not, the current received identifier is not processed,
- if yes, at step **cb2),** an angular position of each wheel is determined for the instant at which the current candidate identifier was received, and an angular division of a full interval, -180° to +180°, is consequently selected for each wheel.
- at step **cb3),** a count of each selected division is incremented by "one" in the division of each wheel, the count being dedicated to the current candidate identifier,
- at step **cb4),** a dispersion value σ1, σ2 σ3, σ4 is calculated for each of the constructed histograms by counting the number of identifiers registered in a division,
- at step **cb5),** a ratio R is established between the first and the second smallest dispersion value for the current identifier,
- at step **cb6),** the ratio R is compared with a threshold value,
- at step **cb7),** if R is equal to or greater than the threshold value, the current candidate identifier is considered to be an identifier of the vehicle and the wheel unit responding to said current candidate identifier is positioned at the position corresponding to the smallest dispersion; if the ratio is not equal to or greater than the threshold value, the process continues,
- at step **cb8),** when it has been decided that the current identifier is an identifier of the vehicle, the current identifier is eliminated from the candidate identifiers,
- at step **cb9),** a check is made as to whether or not the four wheels have been learnt and positioned; if not, the process continues for the candidate identifiers which have not yet been eliminated as being an identifier of the vehicle and for the wheels which have not yet been located; if yes, the process is terminated,
- at step **cb10),** if the process is not terminated at the end of the predetermined duration starting at the end of step **b),** the process has failed.

10. Method according to any one of Claims 1 to 9, in which step **a)** comprises steps S1 to S4 in which:
- at step **S1,** a check is made as to whether or not an identifier forming part of a received current message is received for the first time since the start of the process,
- if it is the first time, at step **S2,** the identifier is memorized in association with the instant at which it was received and an identifier count is incremented by "one" for said identifier; in addition a count of the number **"nID"** of different identifiers received is then memorized; if the identifier which is received with a message is not received for the first time during the process then,
- at step **S3,** a count **"nt"** of said identifier is incremented by "one", and the instant at which said identifier was received is memorized,
- steps **S1** to **S3** continue until the end of the predetermined duration, said end of the predetermined duration being verified at step **S4** and beginning at step **b)** when the predetermined duration has elapsed.

11. Device for determining identities (ID) of wheel units of a vehicle and positions relative to the vehicle of the wheels on which said wheel units are fitted, the vehicle being equipped with a speed sensor for each wheel, each wheel unit being equipped with means for transmitting at a predetermined angular position of the corresponding wheel about its axis a message including the identifier of the wheel unit, a central processing unit receiving said message and information from said speed sensors, **characterized in that** it comprises:
a) a means of counting, for each identifier, of a number **"nt"** of receptions of said identifier,
b) a means of statistical processing of the numbers **"nt"** in order to determine from among all the identifiers received those which are most probably the identifier of a wheel unit of the vehicle, the identifiers becoming candidate identifiers for the vehicle, the statistical process ending when the number of candidate identifiers is at least equal to the number of wheels of the vehicle, and
c) a means of determining that a candidate identifier is the identifier of a wheel unit if said candidate identifier meets a predetermined criterion relating to at least one instant of reception of said candidate identifier and to the angular position of a wheel at said instant, and of assigning to the corresponding wheel the position relative to the vehicle of the speed sensor supplying said angular position.
